## Europäisches Patentamt
## European Patent Office
## Office européen des brevets

(19)

(11) Publication number: **0 223 894**
**B1**

(12)

# EUROPEAN PATENT SPECIFICATION

(45) Date of publication of the patent specification:
**26.04.89**

(51) Int. Cl.⁴: **F16G 11/02**

(21) Application number: **85850377.4**

(22) Date of filing: **25.11.85**

(54) Wire rope joint.

(43) Date of publication of application:
**03.06.87 Bulletin 87/23**

(45) Publication of the grant of the patent:
**26.04.89 Bulletin 89/17**

(84) Designated Contracting States:
**AT BE CH DE FR GB IT LI LU NL SE**

(56) References cited:
**FR-A- 1 484 198**
**FR-A- 1 496 379**
**GB-A- 1 186 584**
**US-A- 2 881 496**
**US-A- 3 082 500**

(73) Proprietor: **Rohland, Bernhard, Lilla Bergsbogatan 1,
S-431 38 Mölndal(SE)**

(72) Inventor: **Rohland, Bernhard, Lilla Bergsbogatan 1,
S-431 38 Mölndal(SE)**

(74) Representative: **Ferkinghoff, Claes-Göran et al, ALFONS
HEDBERGS PATENTBYRA AB Aschebergsgatan 35,
S-411 33 Göteborg(SE)**

## Description

The subject invention concerns a wire rope socket or cable joint designed to lock together two wire rope parts formed into a loop, with one rope part forming the comparatively longer, load-carrying wire rope part and the other one an end part of the wire rope. The wire rope or cable joint consists of a sleeve of elongate cross-sectional configuration which is compressed about the two wire rope parts.

The prior-art technology provides examples of various wire rope joints of the kind described above, for instance the joints disclosed in US-A 3 082 500 and in FR-A 1 484 198. As mentioned above, these wire rope joints consist of a sleeve which is compressed about the wire rope parts in order to lock them to each other. In the compression operation at least the sleeve end opposite the loop preferably is made to take on a conical shape in order to avoid that a transverse edge is formed in the sleeve at this point, by means of which the sleeve might easily catch on an object during lifting operations with the aid of the wire rope.

The arrangement of shaping one sleeve end conical in a direction towards the logitudinal central axis of the sleeve does, however, present several drawbacks. If the sleeve is of even wall thickness and is compressed about the wire rope parts and is formed with the conical part in one single operation the wire rope will be exposed to a stronger pressure in this area, with resulting reduction of durability and strength of the wire rope in the finished wire rope joint. For this reason the end portions of the sleeve blank should have a slightly smaller wall thickness in order to reduce as much as possible the excess stress on the wire rope in this area during the subsequent compression of the sleeve. Another solution is to subject the end portion of the sleeve blank to some treatment, for instance in the manner disclosed in the above FR-A 1 484 198 by forming a couple of V-shaped notches therein for the purpose of facilitating the compression of the end portion into the desired conical shape while at the same time the wire rope is protected. However, all measures referred to in the aforegoing are additional steps in the mechanical treatment to produce the joint which means increased production costs. In addition, the compressed notches are liable to be a safety risk as they may cause fatigue ruptures.

The subject invention provides a wire rope joint which is less expensive and a great deal easier to manufacture than has hitherto been possible while at the same time the drawbacks referred to in the aforegoing are eliminated.

The invention is characterized therein that the sleeve is manufactured from a tubular blank of elongate cross-sectional shape and consists of a piece cut off from said blank, one end of the sleeve being formed by cutting the tubular blank crosswise at essentially right angles to the longitudinal extension of the blank while the opposite end of the sleeve is formed by cutting the tubular blank obliquely along the longer sides thereof.

Further characteristics of the invention will become apparent upon reading the following description and from the appended claims.

The invention will be described in closer detail in the following with reference to the accompanying drawings, wherein

Fig. 1 is a general view of the tubular blank used for the manufacture of the wire rope joint in accordance with the invention,

Fig. 2 is a longitudinal sectional view through a sleeve intended to form the joint before the sleeve has been compressed into its final shape,

Fig. 3 is a longitudinal sectional view through the finished wire rope joint,

Fig. 4 is a lateral view showing an alternative way of mounting the wire rope inside the sleeve in accordance with the invention,

Fig. 5 shows the alternative mounting in a perspective view, and

Fig. 6 is a lateral view of the finished wire rope joint according to the alternative embodiment.

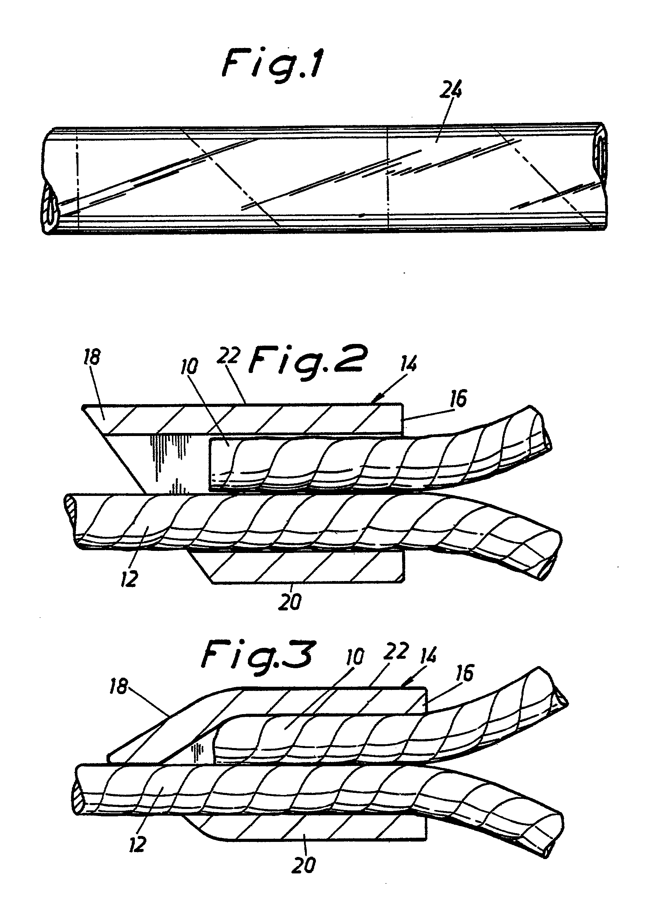

A loop is formed by two wire rope parts, one end part 10 and a longer load-carrying part 12 (see Fig. 2). The wire rope joint includes a sleeve 14 having an elongate cross-sectional configuration with an end face 16 which is turned towards the loop and which extends essentially perpendicularly to the longitudinal axis of the sleeve 14, and an end edge portion 18 which faces away from the loop and forms an oblique angle with the longitudinal axis.

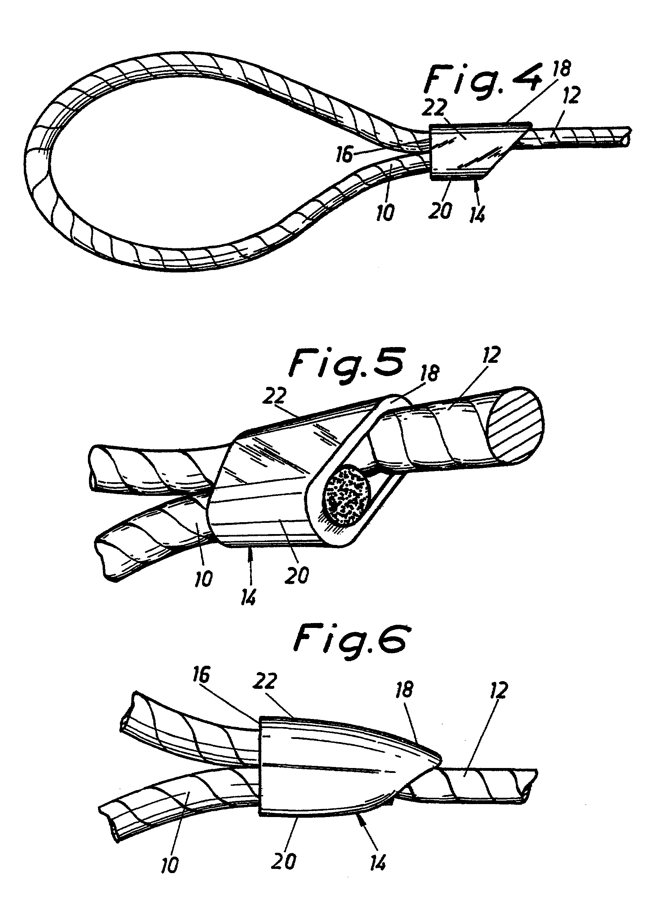

In the embodiment illustrated in Figs. 2 and 3 the longer wire rope part 12 extends through the sleeve 14 along the shorter side 20 thereof. The wire rope part 10 extends over almost all the length of the sleeve 14. When the sleeve 14 is compressed to form the wire rope joint the end edge portion 18 of the longer sleeve side 22 is forced inwards towards the longer wire rope part 12 so that the sleeve takes on the shape of an oblique cone enclosing the end part 10. At the same time, the sleeve 14 allows the longer, load-carrying wire rope part 12 to extend through the sleeve without bending. As a result, there will be no alteration of the line of forces and the wire rope will maintain its full tensile strength, also after completion of the wire rope joint. In addition, no excess pressure of the conical part against the wire rope will occur, as is the case in prior-art wire joints of the kind referred to in the aforegoing.

Pressing the end edge portion 18 of the sleeve 14 inwards provides the further advantage that the wire rope joint will show no tendency of catching in an obstacle or article when the loop is dragged along a support or the ground.

In accordance with the embodiment of Figs. 4–6 the longer wire rope part 12 is carried through the sleeve 14 so as to extend along the longer side 22 thereof while the end part 10 extends along the shorter side 20 of the sleeve almost all the way up to the obliquely cut end. This embodiment meets the requirement in some countries, stipulating that it must be possible to establish the position of the shorter wire part end, also after compression of the sleeve about the parts. The edge portion 18 is formed into a cone in order to avoid catching tendencies whereas the edge portion 20, owing to its obliquely shaped-edge, shows no such tendencies.

The sleeve 14 in accordance with the invention is manufactured from a preferably extruded tubular blank 24 having an elongate cross-sectional configuration (see Fig. 1). The tube 24 is cut in the manner indicated by dash-and-dot-lines, e.g. every other time perpendicularly across the tube, i.e. at right angles to the longitudinal direction of the tube, and every other time at an oblique angle along the longer tube sides. No further working operations are required after the cutting, contrary to what is the case with prior-art sockets as described in the aforegoing. The production of sleeves 14 in the manner indicated provides the further advantage of avoiding material waste almost entirely.

## Claims

1. A wire rope joint to lock together two wire rope parts (10, 12) formed into a loop, one of the parts being a longer, load-carrying wire rope part (12) and the other one an end part (10), said wire rope joint comprising a sleeve (14) of elongate cross-sectional configuration which is compressed about the wire rope parts (10, 12), characterized in, that the sleeve (14) is manufactured from a tubular blank (24) of elongate cross-sectional shape and consists of a piece cut off from said blank, one end of the sleeve (14) being formed by cutting the tubular blank (24) crosswise across the tube at essentially right angles to the longitudinal extension of the tubular blank while the opposite end of the sleeve (14) is formed by cutting the tubular blank (24) obliquely along the longer sides of the tubular blank (24).

2. A wire rope joint as claimed in claim 1, characterized in that the longer wire rope part (12) is carried through the sleeve (14) along the side (20) which owing to the oblique cutting becomes the shorter side of the sleeve, and in that the portion (18) of the longer side (22) of the sleeve (14) which extends beyond the shorter side (20) is pressed inwards towards the longer wire rope part (12) so as to enclose the end of the end part (10).

3. A wire rope joint as claimed in claim 1, characterized in that the longer wire rope part (12) is carried through the sleeve (14) along the sleeve side (22) which owing to the oblique cutting forms the longer side of the sleeve and in that the end part (10) extends along the shorter side (20) of the sleeve up to the obliquely cut end thereof.

## Patentansprüche

1. Drahtseilverbindung zum Verriegeln von zwei zu einer Schlaufe geformten Drahtseilteilen (10, 12) miteinander, wobei einer der Teile ein längerer lasttragender Drahtseilteil (12) und der andere ein Endteil (10) ist, wobei die genannte Drahtseilverbindung eine Hülse (14) von länglicher Querschnittsform umfasst, die um die Drahtseilteile (10, 12) gepresst ist, dadurch gekennzeichnet, dass die Hülse (14) aus einem rohrförmigen Rohling (24) von länglicher Querschnittsform gefertigt ist und aus einem von diesem Rohling abgeschnittenen Teil besteht, wobei ein Ende der Hülse (14) gebildet wird, indem man den rohrförmigen Rohling (24) quer zum Rohr und im wesentlichen rechtwinklig zur Längsrichtung des rohrförmigen Rohlings durchschneidet, während das gegenseitige Ende der Hülse (14) gebildet wird, indem man den rohrförmigen Rohling (24) schräg entlang den längeren Seiten des rohrförmigen Rohlings (24) schneidet.

2. Drahtseilverbindung nach Anspruch 1, dadurch gekennzeichnet, dass man den längeren Drahtseilteil (12) durch die Hülse (14) entlang der Seite (20) führt, die aufgrund des schrägen Schnitts zur kürzeren Seite der Hülse wird, und den Teil (18) der längeren Seite (22) der Hülse (14), der sich über die kürzere Seite (20) hinaus erstreckt, nach innen zum längeren Drahtseilteil (12) hin presst, so dass das Ende des Endteils (10) umschlossen wird.

3. Drahtseilverbindung nach Anspruch 1, dadurch gekennzeichnet, dass man den längeren Drahtseilteil (12) durch die Hülse (14) entlang der Seite (22) führt, die aufgrund des schrägen Schnitts die längere Seite der Hülse bildet, und dass sich der Endteil (10) entlang der kürzeren Seite (20) der Hülse bis zu deren schräggeschnittenem Ende erstreckt.

## Revendications

1. Jonction de câble torsadé destinée à verrouiller ensemble deux parties de câble torsadé (10, 12) mises en forme de boucle, une des parties étant une partie de câble torsadé (12) plus longue et supportant une charge et l'autre étant une partie terminale (10), cette jonction de câble torsadé comportant une virole (14) dont la section transversale est de forme allongée et qui est pressée autour des parties de câble torsadé (10, 12), caractérisée en ce que l'on fabrique la virole (14) à partir d'une pièce brute tubulaire (24) dont la section transversale est de forme allongée et qu'elle consiste en une pièce coupée de cette pièce brute, une extrémité de cette virole (14) étant formée en sectionnant transversalement la pièce brute tubulaire (24) essentiellement à angle droit de la direction longitudinale de la pièce brute tubulaire tandis que l'on forme l'extrémité opposée de la virole (14) en coupant obliquement la pièce brute tubulaire (24) le long des côtés les plus longs de la pièce brute tubulaire (24).

2. Jonction de câble torsadé selon la revendication 1, caractérisée en ce que l'on fait passer la partie de câble torsadé la plus longue (12) à travers la virole (14) le long du côté (20) qui en raison de la coupe oblique devient le côté le plus court de la virole et que la partie (18) du côté le plus long (22) de la virole (14) qui s'étend au-delà du côté le plus court (20) est pressée vers l'intérieur en direction de la partie de câble torsadé la plus longue (12) de façon à enfermer l'extrémité de la partie terminale (10).

3. Jonction de câble torsadé selon la revendication 1, caractérisée en ce que l'on fait passer la partie de câble torsadé la plus longue (12) à travers la virole (14) le long du côté (22) de la virole qui en raison de la coupe oblique forme le côté le plus long de la virole et que la partie terminale (10) s'étend le long du côté le plus court (20) de la virole jusqu'à l'extrémité coupée en oblique de celle-ci.

# Fig.1

# Fig.2

# Fig.3

Fig.4

Fig.5

Fig.6